# EUROPÄISCHE PATENTSCHRIFT

(11) **EP 3 743 863 B1**
(45) Veröffentlichungstag und Bekanntmachung des Hinweises auf die Patenterteilung: **22.07.2026**
(21) Anmeldenummer: 19700611.7
(22) Anmeldetag: 18.01.2019
(51) Int. Cl.: G06Q 10/08

(54) **VERFOLGUNG VON PRODUKTEN**
TRACKING OF PRODUCTS
SUIVI DE PRODUITS

(30) Priorität: 25.01.2018 EP 18153356; 25.05.2018 EP 18174305
(43) Veröffentlichungstag der Anmeldung: 02.12.2020
(73) Patentinhaber: Bayer Aktiengesellschaft, 51371 Leverkusen (DE)
(72) Erfinder: BACKHAUS, Christof, 42499 Hückeswagen (DE); BERGER, Katharina, 53919 Weilerswist (DE); SCHENKEL, Uwe, 40764 Langenfeld (DE); SCHMIDT, Jürgen, 57334 Bad Laasphe (DE); SPETH, Walter, 50259 Pulheim (DE); GLISMANN, Klaus, 50825 Köln (DE); WILLMS, Eric, 50939 Köln (DE); STORZ, Markus, 51375 Leverkusen (DE); WENDT, Arne, 51399 Burscheid (DE); DIBBLE, Gregory, James, Chesterfield, MO 63017 (US)
(74) Vertreter: BIP Patents
(86) Internationale Anmeldenummer: PCT/EP2019/051225
(87) Internationale Veröffentlichungsnummer: WO 2019/145224

(56) Entgegenhaltungen:
- WO-A1-2017/000976
- WO-A1-2017/184596
- GB-A- 2 550 326
- US-A1- 2004 145 474
- US-A1- 2010 171 586
- US-A1- 2014 303 989
- US-A1- 2016 012 498
- US-A1- 2017 181 125
- ANONYMOUS: "What is Active Radio Frequency Identification (Active RFID)? - Definition from Techopedia", 5 October 2017 (2017-10-05), XP055884859, Retrieved from the Internet <URL:https://web.archive.org/web/20171005022506/https://www.techopedia.com/definition/3633/active-radio-frequency-identification-active-rfid> [retrieved on 20220128]
- WIKIPEDIA: "Radio-frequency identification", 17 January 2018 (2018-01-17), XP055480045, Retrieved from the Internet <URL:https://en.wikipedia.org/w/index.php?title=Radio-frequency_identification&oldid=820978051> [retrieved on 20180531]

## Beschreibung

Die vorliegende Erfindung befasst sich mit der Verfolgung von Produkten mit Hilfe von aktiven Funketiketten.

Für einen Hersteller und/oder Vertreiber von Produkten kann die Verfolgung der Produkte sinnvoll oder sogar notwendig sein. Pharmazeutische Produkte und Pflanzenschutzmittel unterliegen beispielsweise einer Reihe von behördlichen Regularien; dazu zählt in einigen Staaten die Anforderung, eine Rückverfolgbarkeit der Produkte zu gewährleisten (Track & Trace). Für diesen Zweck werden einzelne Verpackungen mit einer eindeutigen Kennung (z.B. einer Seriennummer) versehen (Serialisierung), um sie zu einem späteren Zeitpunkt eindeutig identifizieren zu können. Anhand der eindeutigen Kennung lässt sich ein Produkt, das man in den Händen hält, eindeutig zuordnen; es ist jedoch nicht möglich, den Standort eines Produkts, das in den Verkehr gebracht worden ist, oder seinen Zustand allein anhand der eindeutigen Kennung zu ermitteln.

Eine Verfolgung von Produkten kann auch für die Optimierung der Produktion und/oder für logistische Zwecke wertvoll sein. Falls ein Nutzer oder Vertreiber von Verbrauchsprodukten einen hohen Lagerbestand hat, ist nicht damit zu rechnen, dass dieser Nutzer/Vertreiber kurzfristig eine größere Menge an neuen Produkten bestellen wird. Diese Information kann in die Planung der Herstellung der Produkte und/oder die Verteilung und/oder Lagerung bereits hergestellter Produkte einfließen, um eine optimale Produktionsmaschinenauslastung und/oder Lagerstättenauslastung und/oder Transportmittelauslastung zu erzielen.

Es wäre daher wünschenswert zu wissen, wo sich einzelne Produkte, die in den Verkehr gebracht worden sind, befinden.

GB2550326A offenbart Verfahren und Vorrichtungen zur Überwachung und Verfolgung von Beständen oder Vermögenswerten.

Ferner wäre es wünschenswert zu wissen, ob eine Verpackung, in der sich ein Produkt üblicherweise befindet, bevor es genutzt wird, bereits geöffnet worden ist oder noch ungeöffnet ist, da bei geöffneten Verpackungen in der Regel davon ausgegangen werden kann, dass die darin befindlichen Produkte in absehbarer Zeit genutzt werden und dann neue Produkte benötigt werden.

WO2017/184596A1 offenbart ein drahtloses Kommunikationsgerät in Form eines Etiketts, das mit einem Kontinuitätssensor ausgestattet ist. Der Kontinuitätssensor umfasst einen Mechanismus zum wirksamen Abreißen oder Entfernen eines Teils des Etikettensubstrats, das mindestens einen Teil des Kontinuitätssensors enthält, von einem Behälter und/oder einer Verpackung.

Es wäre wünschenswert, die gesamte Logistikkette - von der Herstellung bis zum Verbrauch/Gebrauch des Produkts - überwachen zu können, beispielsweise um prüfen zu können, ob Lagerbedingungen eingehalten worden sind. Es wäre wünschenswert, die Bedingungen, denen Produkte beim Transport und/oder der Lagerung unterliegen, in Erfahrung bringen zu können.

Erfindungsgemäß wird dies durch die Gegenstände der vorliegenden Erfindung erreicht.

Ein erster Gegenstand der vorliegenden Erfindung ist ein aktives Funketikett,
wobei das Funketikett so ausgestaltet ist, dass es mit einer Verpackung eines Produkts verbunden werden kann,
wobei das Funketikett mindestens einen Sensor umfasst, der mindestens eine Umgebungsbedingung und mindestens einen Verpackungszustand erfasst,
wobei das Funketikett so konfiguriert ist, dass es in zeitlichen Abständen ein Advertizing-Datenpaket aussendet,
wobei das Advertizing-Datenpaket eine eindeutige Kennung und mindestens eine Zustandsinformation zu der mindestens einen Umgebungsbedingung und dem mindestens einen Verpackungszustand umfasst.

Ein weiterer Gegenstand der vorliegenden Erfindung ist ein System umfassend
- mindestens ein aktives Funketikett, und
- mindestens einen Empfänger,

wobei das Funketikett so ausgestaltet ist, dass es mit einer Verpackung eines Produkts verbunden werden kann,
wobei das Funketikett mindestens einen Sensor umfasst, der mindestens eine Umgebungsbedingung und mindestens einen Verpackungszustand erfasst,
wobei das Funketikett so konfiguriert ist, dass es in zeitlichen Abständen ein Advertizing-Datenpaket aussendet,
wobei das Advertizing-Datenpaket eine eindeutige Kennung und mindestens eine Zustandsinformation zu der mindestens einen Umgebungsbedingung und dem mindestens einen Verpackungszustand umfasst,
wobei der Empfänger umfasst:
   - eine Empfangseinheit,
   - eine Ortsermittlungseinheit,
   - eine Datenverarbeitungseinheit,
   - eine Steuereinheit und
   - eine Sendeeinheit
wobei die Steuereinheit des Empfängers so konfiguriert ist, dass sie die Empfangseinheit des Empfängers veranlasst ein oder mehrere Frequenzbereiche abzuhören und ein Advertizing-Datenpaket zu empfangen, das von dem aktiven Funketikett, das mit einer Verpackung eines Produkts verbunden ist, versendet wird,
wobei die Steuereinheit des Empfängers so konfiguriert ist, dass sie die Datenverarbeitungseinheit des Empfängers veranlasst, aus dem Advertizing-Datenpaket eine eindeutige Kennung und eine oder mehrere Zustandsinformationen zu extrahieren,
wobei die Steuereinheit des Empfängers so konfiguriert ist, dass sie die Ortsermittlungseinheit des Empfängers veranlasst, eine Ortsinformation zu ermitteln, und
wobei die Steuereinheit des Empfängers so konfiguriert ist, dass sie die Sendeeinheit des Empfängers veranlasst, die eindeutige Kennung und die Zustandsinformation(en) und die Ortsinformation über ein Netzwerk an einen Server zu übermitteln.

Ein weiterer Gegenstand der vorliegenden Erfindung ist ein Verfahren umfassend die Schritte
- Verbinden eines aktiven Funketiketts mit einer Verpackung eines Produkts,
- Erfassen mindestens einer Umgebungsbedingung und mindestens eines Verpackungszustandes durch das Funketikett
- Versenden eines Advertizing-Datenpakets durch das Funketikett, wobei das Advertizing-Datenpaket eine eindeutige Kennung und mindestens eine Zustandsinformation zu der mindestens einen Umgebungsbedingung und dem mindestens einen Verpackungszustand umfasst,
- Abhorchen eines oder mehrerer Frequenzbereiche und Empfangen des Advertizing-Datenpakets durch einen Empfänger
- Extrahieren der eindeutigen Kennung und der mindestens einen Zustandsinformation aus dem Advertizing-Datenpaket durch den Empfänger,
- Ermitteln einer Ortsinformation durch den Empfänger, und
- Übermitteln der eindeutigen Kennung und der mindestens einen Zustandsinformation und der Ortsinformation über ein Netzwerk an einen Server.

Die Erfindung wird nachstehend näher erläutert, ohne zwischen den Erfindungsgegenständen zu unterscheiden. Die nachfolgenden Erläuterungen sollen vielmehr für alle Erfindungsgegenstände in analoger Weise gelten, unabhängig davon, in welchem Kontext sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Gemäß der vorliegenden Erfindung werden Verpackungen von Produkten mit einem aktiven Funketikett ausgestattet.

Bei dem Produkt kann es sich um einen beliebigen Gegenstand (ein Sachgut) handeln, der kommerziell angeboten und verkauft werden kann.

Vorzugsweise handelt es sich bei dem Produkt um einen Verbrauchsartikel oder ein Verbrauchmaterial, der/das von einem Nutzer (Endkunde) für einen definierten Verwendungszweck eingesetzt und dabei "verbraucht" wird, d.h. in einen Zustand überführt wird, in dem er/es nicht mehr für den ursprünglichen Verwendungszweck genutzt werden kann, so dass der Nutzer ein neues Produkt erwerben muss. Vorzugsweise handelt es sich um ein Produkt, das nicht zur unmittelbaren Verwendung durch einen Nutzer bestimmt ist, sondern eine gewisse Zeit gelagert werden kann, bevor es eingesetzt wird. Die Lagerungszeit beträgt vorzugsweise mindestens mehrere Wochen bis mehrere Jahre.

Beispiele für Produkte im Sinne der vorliegenden Erfindung sind Arzneimittel, Pflanzenschutzmittel, Kosmetika, Reinigungsmittel und dergleichen. Vorzugsweise handelt es sich bei dem Produkt um ein Pflanzenschutzmittel (z.B. ein Herbizid, ein Insektizid oder ein Fungizid).

Das Produkt befindet sich in einer Verpackung. Die Verpackung kann eingesetzt werden, um das Produkt in einen transportablen Zustand zu bringen und/oder es vor Umwelteinflüssen, die dem Produkt schaden können (z.B. Feuchtigkeit, Luftsauerstoff, Licht und dergleichen), zu schützen.

Beispiele für Verpackungen sind Kartons (Kartonagen), Blister, Kanister, Flaschen, Säcke, Beutel, Gebinde und dergleichen.

Die Verpackung ist mit einem aktiven Funketikett ausgestattet. Der Begriff "aktives Funketikett" bedeutet, dass das Funketikett über Mittel zur Energieversorgung verfügt.

Üblicherweise wird das Funketikett mit der Verpackung verbunden, nachdem die Verpackung mit dem Produkt befüllt und verschlossen worden ist. Es ist aber auch denkbar, dass das Funketikett mit der Verpackung verbunden wird, bevor das Produkt in die Verpackung gefüllt wird und/oder die Verpackung verschlossen wird.

Denkbar ist auch, dass das Funketikett ein Bestandteil der Verpackung ist.

Das Funketikett kann zum Beispiel auf der Verpackung aufgedruckt sein oder mit der Verpackung zu einem Verbund zusammengefügt (z.B. laminiert) sein.

Das Funketikett kann sich außerhalb der Verpackung befinden - das ist der Bereich der Verpackung, der keinen Kontakt zum Produkt hat aber Kontakt zur Außenwelt (Umwelt) hat. Das Funketikett kann sich aber auch innerhalb der Verpackung befinden - das ist der Bereich der Verpackung, der in Kontakt mit dem Produkt steht. Denkbar ist auch, dass das Funketikett zwischen zwei Verpackungen eingebracht ist.

Das Funketikett kann an oder in einem Verschluss der Verpackung (z.B. an oder in einem Schraubverschluss) angebracht/eingebracht sein.

In einer Ausführungsform der vorliegenden Erfindung ist das Funketikett, sobald es mit der Verpackung verbunden worden ist, irreversibel mit der Verpackung verbunden, d.h. der Versuch der Entfernung des Funketiketts von der Verpackung würde zu einer Zerstörung des Funketiketts führen, wobei "Zerstörung des Funketiketts" bedeutet, dass das Funketikett nicht mehr erfindungsgemäß einsetzbar ist. Eine solche irreversible Verbindung kann beispielsweise durch eine Klebeverbindung zwischen Funketikett und Verpackung erreicht werden, wobei die Kraft zur Überwindung der Klebeverbindung und damit zum Ablösen des Funketiketts von der Verpackung größer ist, als die Kraft, die einzelne Komponenten des Funketiketts zusammenhält, so dass ein Ablöseversuch dazu führt, dass einzelne Komponenten des Funketiketts voneinander getrennt werden und damit das Funketikett zerstört wird.

In einer anderen Ausführungsform der vorliegenden Erfindung ist das Funketikett so ausgeführt, dass es wiederverwendet werden kann. Es kann also von der Verpackung wieder gelöst werden und mit einer anderen Verpackung verbunden werden.

Das Funketikett verfügt über mindestens einen Sensor. Ein "Sensor" ist ein technisches Bauteil, das bestimmte physikalische oder chemische Eigenschaften und/oder die stoffliche Beschaffenheit seiner Umgebung qualitativ oder als Messgröße quantitativ erfassen kann. Die Eigenschaften werden mittels physikalischer oder chemischer Effekte erfasst und in weiterverarbeitbare, meist elektrische Signale umgeformt. Bevor die elektrischen Signale über Funk an einen Empfänger übermittelt werden, werden sie üblicherweise noch digitalisiert.

Der mindestens eine Sensor erfasst Messwerte, die den Zustand der Verpackung und des Produkts zum Zeitpunkt der Messwerterfassung charakterisieren. Über den mindestens einen Sensor wird also eine Zustandsinformation generiert.

Bei einem solchen Zustand kann es sich um eine oder mehrere Umweltbedingungen handeln, der/denen die Verpackung/das Produkt unterliegt/unterlag ("äußerer Parameter"), und um einen Verpackungszustand ("innerer Parameter") handeln.

Umweltbedingungen sind beispielsweise Temperatur, Luftdruck, Luftfeuchte, Intensität elektromagnetischer Strahlung in einem definierten Wellenlängenbereich, Beschleunigungskräfte, denen der Sensor ausgesetzt ist, und dergleichen. Umweltbedingungen werden zu dem Zeitpunkt und an dem Ort erfasst, an dem sie herrschen. Wird eine Umweltbedingung zu einem Zeitpunkt von einem Sensor erfasst, so unterliegt der Sensor (bzw. das Produkt) dieser Umweltbedingung zu diesem Zeitpunkt.

Verpackungszustände charakterisieren die Verpackung. Es handelt sich insbesondere um Umweltbedingungen, denen die Verpackung zu einem früheren Zeitpunkt ausgesetzt war. Verpackungszustände sind beispielsweise: die Verpackung ist geöffnet oder ungeöffnet, die Verpackung wurde gequetscht oder nicht gequetscht, die Verpackung war einer Temperatur ausgesetzt, die oberhalb und/oder unterhalb eines definierten Temperaturgrenzwerts liegt, die Verpackung war einer (Luft-)feuchte ausgesetzt, die oberhalb eines definierten Feuchtegrenzwerts liegt, die Verpackung war einem Druck ausgesetzt, der unterhalb und/oder oberhalb eines definierten Druckgrenzwerts liegt, die Verpackung war Beschleunigungskräften ausgesetzt, die oberhalb eines definierten Beschleunigungsgrenzwerts liegen, und dergleichen. Ein Verpackungszustand kennzeichnet Umweltbedingungen, denen eine Verpackung vor dem Zeitpunkt der Erfassung des jeweiligen Verpackungszustands ausgesetzt war. Üblicherweise werden zur Erfassung von Verpackungszuständen Sensoren eingesetzt, bei denen eine Komponente durch Umweltbedingungen oberhalb und/oder unterhalb von definierten Grenzwerten irreversibel verändert wird. Eine solche Komponente wird nachfolgend auch als Indikator bezeichnet. Der Indikator zeigt also an, ob der Indikator einer definierten Umweltbedingung ausgesetzt war.

Ziel der Erfassung von Umweltbedingungen und/oder Verpackungszuständen kann es sein, nachzuverfolgen, ob in der Vertriebskette - von der Herstellung bis zum Endnutzer - stets die für das Produkt erforderlichen Transport- und/oder Lagerbedingungen eingehalten worden sind. Ziel der Erfassung von Umweltbedingungen und/oder Verpackungszuständen kann ferner sein, den Transport und/oder die Lagerbedingungen zu verfolgen, damit stets bekannt ist, wo sich ein bestimmtes Produkt gerade befindet und/oder in welchem Zustand es sich befindet.

Es ist denkbar, dass das Produkt gekühlt werden muss, damit es nicht verdirbt. In einem solchen Fall kann ein Temperatursensor zu definierten Zeitpunkten die Temperatur erfassen. Liegt ein gemessener Temperaturwert oberhalb einer definierten Temperaturgrenze, wird offenkundig, dass die Kühlkette aktuell nicht eingehalten wird. Es kann aber auch ein Sensor verwendet werden, der einen Temperatur-Indikator umfasst, der durch eine Temperatur oberhalb eines definierten Grenzwerts irreversibel verändert wird. Der Sensor prüft bei der Erfassung, ob sich der Temperatur-Indikator verändert hat (weil die Temperatur in der Vergangenheit oberhalb des definierten Grenzwerts lag) oder ob er sich nicht verändert hat.

Es ist denkbar, dass das Produkt nicht frostsicher ist und damit keiner Temperatur unterhalb eines Temperaturgrenzwertes ausgesetzt werden sollte. In einem solchen Fall kann ein Temperatursensor zu definierten Zeitpunkten die Temperatur erfassen. Liegt ein gemessener Temperaturwert unterhalb einer definierten Temperaturgrenze, wird offenkundig, dass das Produkt zu tiefen Temperaturen ausgesetzt war und Schaden genommen haben könnte. Es kann aber auch ein Sensor verwendet werden, der einen Temperatur-Indikator umfasst, der durch eine Temperatur unterhalb eines definierten Grenzwerts irreversibel verändert wird. Der Sensor prüft bei der Erfassung, ob sich der Temperatur-Indikator verändert hat (weil die Temperatur in der Vergangenheit unterhalb des definierten Grenzwerts lag) oder ob er sich nicht verändert hat.

Es ist denkbar, dass das Produkt nicht feucht werden darf, da es sonst Schaden nimmt oder Qualitätseinbußen zu befürchten sind; in einem solchen Fall kann ein Feuchtesensor zu definierten Zeitpunkten die Feuchte (z.B. Luftfeuchtigkeit) erfassen. Liegt ein gemessener Feuchtewert oberhalb eines definierten Grenzwerts, wird offenkundig, dass die aktuelle Feuchte zu hoch ist und Maßnahmen zur Reduzierung der Feuchte ergriffen werden sollten. Es kann aber auch ein Sensor verwendet werden, der einen Feuchte-Indikator umfasst, der durch eine Feuchte oberhalb eines definierten Grenzwerts irreversibel verändert wird. Der Sensor prüft bei der Erfassung, ob sich der Feuchte-Indikator verändert hat (weil die Feuchte in der Vergangenheit oberhalb des definierten Grenzwerts lag) oder ob er sich nicht verändert hat.

Es ist denkbar, dass ein Produkt empfindlich gegenüber Beschleunigungskräften ist, beispielsweise deswegen, weil es zerbrechlich ist. In einem solchen Fall kann ein Beschleunigungssensor zu definierten Zeitpunkten die Beschleunigungskräfte erfassen. Liegt ein gemessener Wert für die aktuell auf den Sensor einwirkenden Beschleunigungskräfte oberhalb eines definierten Grenzwerts, wird offenkundig, dass Gefahr besteht, dass das Produkt geschädigt wird. Es kann aber auch ein Sensor verwendet werden, der einen Beschleunigungs-Indikator umfasst, der durch Beschleunigungskräfte oberhalb eines definierten Grenzwerts irreversibel verändert wird. Der Sensor prüft bei der Erfassung, ob sich der Beschleunigungs-Indikator verändert hat (weil die Beschleunigungskräfte in der Vergangenheit oberhalb des definierten Grenzwerts lagen) oder ob er sich nicht verändert hat.

Es ist denkbar, dass ein Produkt lichtempfindlich ist. In einem solchen Fall kann ein Lichtintensitätssensor zu definierten Zeitpunkten die Intensität elektromagnetischer Strahlung eines definierten Wellenlängenbereichs (z.B. im Bereich des sichtbaren Lichts (380 nm bis 780 nm) und/oder im Bereich des ultravioletten Lichts (z.B. UV-A (380 nm bis 315 nm) und/oder UV-B (315 nm bis 280 nm) oder ein anderer Wellenlängenbereich oder mehrere Wellenlängenbereiche) erfassen. Liegt ein gemessener Wert für die aktuell auf den Sensor einwirkende Lichtintensität oberhalb eines definierten Grenzwerts, wird offenkundig, dass das Produkt aktuell einer zu hohen Lichtintensität ausgesetzt ist; es sollten Maßnahmen zur Reduzierung der Lichtintensität ergriffen werden. Es kann aber auch ein Sensor verwendet werden, der einen Licht-Indikator umfasst, der durch eine Lichtintensität oberhalb eines definierten Grenzwerts irreversibel verändert wird. Der Sensor prüft bei der Erfassung, ob sich der Licht-Indikator verändert hat (weil die Lichtintensität in der Vergangenheit oberhalb des definierten Grenzwerts lag) oder ob er sich nicht verändert hat.

Zur Messung von Temperatur, Feuchte, Druck, Beschleunigung, Lichtintensität und anderen Umweltbedingungen existieren eine Vielzahl kommerziell verfügbarer Sensoren und Indikatoren.

Umweltbedingungen können mit einem oder mehreren Sensoren zu definierten Zeitpunkten erfasst werden. "Definierter Zeitpunkt" bedeutet, dass der Zeitpunkt, zu dem eine Messwerterfassung erfolgt, klaren Regeln folgt. Es ist beispielsweise denkbar, dass eine Messwerterfassung zu vorher festgelegten Zeitpunkten erfolgt, wie z.B. einmal am Tag um 12 Uhr mittags, oder jede volle Stunde oder dergleichen. Unter einem "definierten Zeitpunkt" soll aber auch das Eintreten eines definierten Ereignisses verstanden werden, dass eine Messwerterfassung triggert, wie zum Beispiel ein äußerer (elektromagnetischer) Impuls, eine Erschütterung und dergleichen. Es ist denkbar, dass die Messwerterfassung und die Versendung von Advertizing-Datenpaketen miteinander gekoppelt ist, zum Beispiel in der Weise, dass vor einer Versendung eines Advertizing-Datenpakets eine Messwerterfassung veranlasst wird und der/die erfassten Messwerte(e) dann in Form des Advertizing-Datenpakets versandt wird/werden. Denkbar ist aber auch eine Entkoppelung; für diesen Fall weist das Funketikett einen Datenspeicher auf, in dem Messwerte gespeichert werden können. Messwerte werden zu definierten Zeitpunkten erfasst und in dem Datenspeicher gespeichert. Vor einer Versendung eines Advertizing-Datenpakets ermittelt eine Steuereinheit, die Bestandteil des Funketiketts ist, die Umweltbedingung anhand der gespeicherten Messwerte und versendet die Information über die Umweltbedingung dann in Form des Advertizing-Datenpakets.

Das gleiche gilt für die Ermittlung und Versendung eines oder mehrerer Verpackungszustände. Die Erfassung von Messwerten zur Ermittlung eines Verpackungszustands erfolgt zu definierten Zeitpunkten und kann mit der Versendung eines Advertizing-Datenpakets gekoppelt sein oder davon entkoppelt sein. Es ist denkbar, dass Messwerte unmittelbar vor Versenden eines Advertizing-Datenpakets erfasst werden; es ist denkbar, dass Messwerte erfasst und in einem Datenspeicher gespeichert werden.

In einer bevorzugten Ausführungsform umfasst das Funketikett einen Sensor, der erfasst, ob die Verpackung ungeöffnet ist oder ob sie geöffnet ist / geöffnet worden ist.

Der Sensor erfasst den Verpackungszustand (ungeöffnet / geöffnet) vorzugsweise anhand einer physikalischen Eigenschaft, die sich ändert, wenn die Verpackung geöffnet worden ist und/oder geöffnet wird. Die physikalische Eigenschaft, die sich durch Öffnen der Verpackung ändert, kann zum Beispiel eine elektrische Leitfähigkeit (bzw. ein elektrischer Widerstand) und/oder eine elektrische Kapazität und/oder eine Induktivität oder dergleichen sein.

Es ist denkbar, dass der Sensor so ausgestaltet ist, dass er in definierten Zeitabständen prüft, ob die Verpackung geöffnet oder ungeöffnet ist.

In einer Ausführungsform der vorliegenden Erfindung verfügt das Funketikett über einen oder mehrere elektrisch leitfähige Drähte, die so angebracht sind, dass beim Öffnen der Verpackung mindestens ein Draht irreversibel unterbrochen wird, so dass durch diesen Draht kein elektrischer Strom mehr fließen kann. Der Sensor erkennt einen unterbrochenen Draht daran, dass sich die Leitfähigkeit geändert hat. Dieses Prinzip ist beispielsweise beschrieben in WO9604831A1 oder DE19516076A1. Der Draht fungiert im vorliegenden Fall als Indikator; das Öffnen der Verpackung führt zu einer irreversiblen Veränderung des Indikators: der Draht wird unterbrochen.

Es ist denkbar, dass der Sensor so ausgestaltet ist, dass er den Prozess des Öffnens der Verpackung erfasst. Eine sensorische Erfassung der Zustandsänderung (ungeöffnet->geöffnet) kann beispielsweise anhand des piezoelektrischen Effekts erfolgen: das Öffnen der Verpackung führt zu einer mechanischen Beanspruchung eines Piezoelements, wodurch eine elektrische Spannung aufgebaut wird. Diese Spannung oder ihre Wirkung kann durch einen Sensor registriert werden.

Das Funketikett kann über einen Datenspeicher verfügen, in dem die Information über den Verpackungszustand gespeichert ist. Es ist denkbar, dass der Sensor so ausgestaltet ist, dass er in definierten Zeitabständen prüft, ob die Verpackung noch ungeöffnet ist; sobald sie geöffnet ist, wird der entsprechende (neue) Verpackungszustand in einem Datenspeicher gespeichert. Bevor das Funketikett den Verpackungszustand in Form eines Advertizing-Daten versendet, liest eine Steuereinheit, die Bestandteil des Funketiketts ist, den Verpackungszustand aus dem Datenspeicher aus. Die Erfassung des Verpackungszustands und die Versendung der Zustandsinformation sind in einem solchen Fall entkoppelt. Das Funketikett kann so konfiguriert sein, dass es den Verpackungszustand so lange mittels eines Sensors zu definierten Zeitpunkten abfragt, bis der Sensor registriert, dass die Verpackung geöffnet wird/worden ist. Danach ist keine weitere Abfrage des Verpackungszustands über einen Sensor mehr erforderlich.

Das Funketikett weist ferner eine eindeutige Kennung auf. Die eindeutige Kennung kann eine Nummer oder ein alphanumerischer Code oder ein Binärcode oder dergleichen sein. Die eindeutige Kennung dient zur Identifizierung des Funketiketts bzw. zur Identifizierung des Produkts, mit dem das Funketikett über die Verpackung verbunden ist. Üblicherweise ist eine Produktdatenbank Bestandteil des erfindungsgemäßen Systems. Über die eindeutige Kennung können Informationen (Produktname, Produktart, Hersteller, Losnummer, Herstelldatum, Zusammensetzung, Verwendungshinweise, Verfallsdatum, Mindesthaltbarkeitsdatum und dergleichen) zum jeweiligen Produkt aus der Datenbank abgefragt werden.

Die Kennung ist in einem Datenspeicher des Funketiketts gespeichert. Vorzugsweise handelt es sich um einen Halbleiterspeicher. Es kann sich um denselben Datenspeicher handeln, in dem auch die Verpackungszustandsinformation und/oder Messwerte zu Umweltbedingungen gespeichert sein können; es kann sich aber auch um einen separaten Datenspeicher handeln. Der Datenspeicher für die eindeutige Kennung ist üblicherweise ein WORM-Speicher (WORM: *write once, read many,* engl. für "schreibe einmal, lese vielfach"). Es ist denkbar, dass das Funketikett vor der Verbindung mit der Verpackung bereits über eine eindeutige Kennung verfügt. Es ist aber auch denkbar, dass die eindeutige Kennung erst nach der Verbindung des Funketiketts mit der Verpackung in den Datenspeicher eingeschrieben wird. Eine Steuereinheit des Funketiketts kann auf den Datenspeicher zugreifen und die eindeutige Kennung auslesen. Die Steuereinheit kann die eindeutige Kennung mittels einer Sendeeinheit des Funketiketts versenden.

Die eindeutige Kennung ist sowohl in einem Datenspeicher des Funketiketts als auch in einem separaten Produktdatenspeicher gespeichert, so dass die eindeutige Kennung und das Produkt miteinander in Beziehung stehen und bei Kenntnis der eindeutigen Kennung Informationen zum Produkt aus der Produktdatenbank gewonnen werden können.

In einer bevorzugten Ausführungsform verfügt das Funketikett über einen optisch lesbaren Code, wie z.B. einen Barcode oder einen Matrixcode (wie z.B. QR-Code oder Data Matrix Code). Der optisch lesbare Code umfasst eine eindeutige Kennung, anhand derer das Funketikett und/oder das Produkt und/oder eine Produktcharge und/oder dergleichen eindeutig identifiziert werden kann. Dabei kann es sich um dieselbe eindeutige Kennung handeln, auf die die Steuereinheit des Funketiketts zugreifen kann. Es kann sich aber auch um eine andere (weitere) eindeutige Kennung handeln. Der optische Code kann ferner eine Internetadresse umfassen. Der optisch lesbare Code ist zum Beispiel auf das Funketikett aufgedruckt, eingraviert, eingeätzt, in Form eines Aufklebers an dem Funketikett angebracht oder in anderer Weise mit dem Funketikett verbunden oder in das Funketikett eingebracht.

Der optische Code dient dazu, dem Käufer/Nutzer des Produkts weitere Informationen über das Produkt zur Verfügung zu stellen. Dies geschieht zum Beispiel, indem der Käufer/Nutzer den optisch lesbaren Code mit Hilfe eines mobilen Computersystems wie beispielsweise mit einem Smartphone oder einem Tabletcomputer in das mobile Computersystem einliest. Üblicherweise verfügen mobile Computersysteme über eine Kamera, mit der optische Codes gelesen werden können. Vorzugsweise ist das mobile Computersystem (durch ein installiertes Softwareprogramm (eine "App")) so konfiguriert, dass es auf Basis des eingelesenen optischen Codes eine Internetseite öffnet, auf der dem Käufer/Nutzer Informationen zu dem Produkt präsentiert werden. Dabei kann es sich um Informationen handeln, die spezifisch für den Käufer/Nutzer dieses Produkts gedacht sind. Denkbar ist zum Beispiel die Präsentation einer Mitteilung zu einem Rückruf des Produkts oder Informationen darüber, was zu tun ist, falls das Produkt definierten Umweltbedingungen ausgesetzt war, die eine Qualitätseinbuße bedeuten können. Vorzugsweise handelt es sich bei dem mobilen Computersystem um den erfindungsgemäßen Empfänger.

In einer bevorzugten Ausführungsform erhält der Käufer/Nutzer über das Funketikett eine Mitteilung, dass er den optischen Code einlesen und damit Zugang zu einer Internetseite mit Informationen, die für ihn bereitgestellt worden sind, aufbauen soll. Denkbar ist zum Beispiel, dass das Funketikett über eine Statusanzeige verfügt, die ihm mitteilt, ob die Verpackung des Produkts geschlossen (z.B. versiegelt) ist, ob sie geöffnet und verwendbar ist oder ob er vor der Nutzung des Produkts weitere Informationen von der Internetseite, zu der er über den optischen Code gelangt, abrufen soll. Bei der Statusanzeige kann es sich beispielsweise um eine oder mehrere Leuchtdioden (LED) oder um eine Flüssigkristallanzeige (LCD) handeln. Es ist denkbar, dass die Steuereinheit des Funketiketts so konfiguriert ist, dass sie die mittels der Statusanzeige angezeigten Informationen ändert, wenn die mittels eines oder mehrerer Sensoren erfassten Messwerte definierte Werte annehmen oder erreichen. Beispielsweise kann die Statusanzeige anzeigen, dass die Verpackung ordnungsgemäß verschlossen ist, wenn der Verpackungszustandssensor registriert, dass die Verpackung geschlossen ist. Die Statusanzeige kann anzeigen, dass die Verpackung geöffnet ist, wenn der Verpackungszustandssensor registriert, dass die Verpackung geöffnet (worden) ist. Die Statusanzeige kann anzeigen, dass das Produkt schädlichen Umweltbedingungen (eine zu hohe Temperatur, eine zu niedrige Temperatur, eine zu hohe Luftfeuchte, ein zu hoher Druck, eine zu hohe Beschleunigung und dergleichen) ausgesetzt war, wenn ein Sensor registriert, dass ein Grenzwert (Temperatur, Luftfeuchte, Druck, Beschleunigungskraft etc.) unter- oder überschritten (worden) ist (Warnsignal). Der Käufer/Nutzer wird durch ein solches Warnsignal darauf hingewiesen, dass eventuell etwas mit dem Produkt nicht in Ordnung ist und er vor einer Verwendung Informationen über die Internetseite abrufen sollte. Denkbar ist auch, dass das Funketikett über eine Empfangseinheit verfügt, mit dem das Funketikett ein Signal empfangen kann. Auf diese Weise ist es zum Beispiel möglich, die Statusanzeige über ein externes Signal zu ändern, zum Beispiel, um ein Produkt zurückzurufen.

Das Funketikett verfügt über Mittel zur Energieversorgung.

Dabei kann es sich beispielsweise um eine Batterie oder einen Akkumulator handeln. In einer bevorzugten Ausführungsform handelt es sich bei den Mitteln zur Energieversorgung um eine druckbare Batterie wie sie beispielhaft ist in US2010021799A, EP3104433A1, KR20170085256A, KR20170098004A, und US2010081049A. Vorzugsweise ist die Batterie biologisch abbaubar (siehe z.B. US2016351936A).

Das Funketikett kann ferner so ausgestaltet sein, dass es elektrische Energie aus der Umgebung des Funketiketts gewinnt. Die elektrische Energie dient der elektrischen Versorgung des Funketiketts, damit dieses seine erfindungsgemäßen Funktionen ausüben kann. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch das Funketikett genutzt oder "geerntet" werden. Diese Art der elektrischen Energieerzeugung ist als *Energy Harvesting* bekannt. Mit *Energy Harvesting* werden im Bereich der Elektronik Verfahren bezeichnet, mit denen kleinste Mengen frei verfügbarer Energie aus der Umgebung gewonnen und gespeichert werden können. Diese Technik ermöglicht es, Funketiketten während der gesamten Lebensdauer mit Energie zu versorgen, sodass sie nach der Installation nicht mehr gewartet werden müssen. *Energy Harvesting* Systeme umfassen üblicherweise einen Energiewandler, eine Energiemanagementeinheit mit einem Energiespeicher, der üblicherweise ein Kondensator ist. Der Energiewandler, auch Mikrogenerator genannt, wandelt Energie aus der Umgebung in elektrische Energie um. Für die Umwandlung können beispielsweise der piezoelektrische Effekt, der thermoelektrische Effekt oder der photoelektrische Effekt genutzt werden. Weitere Details sind im Stand der Technik beschrieben (siehe z.B. http://www.harvestingenergy.de/ und die dort aufgeführten Publikationen).

Das Funketikett ist ferner so ausgestaltet, dass es ein Advertizing-Datenpaket, auch "Beacon" genannt, versenden kann. Das Advertizing-Datenpaket umfasst die eindeutige Kennung und mindestens eine Zustandsinformation zu der mindestens einen erfassten Umgebungsbedingung und/oder dem mindestens einen erfassten Verpackungszustand.

Bei dem Advertizing-Datenpaket kann es sich um ein Advertizing-Datenpaket handeln, das dem Bluetooth-Standard entlehnt ist. Bluetooth ist ein in den 1990er Jahren durch die *Bluetooth Special Interest Group* (SIG) entwickelter Industriestandard gemäß IEEE 802.15.1 für die Datenübertragung zwischen Geräten über kurze Distanz per Funktechnik (WPAN). Geräte nach den Standards der Bluetooth SIG senden als Short Range Devices (SRD) in einem lizenzfreien ISM-Band (*Industrial, Scientific and Medical Band*) zwischen 2,402 GHz und 2,480 GHz. Eine Unterform von Bluetooth ist Bluetooth *Low Energy,* kurz Bluetooth LE oder BLE, wobei ein geringerer Energieverbrauch als beim klassischen Bluetooth benötigt wird. Bluetooth LE teilt insbesondere das ISM-Frequenzband in 40 Kanäle mit einer Breite von 2 MHz. Herkömmlicherweise senden Bluetooth-LE-Transponder unabhängig voneinander kurze Advertizing-Datenpakete auf einem von drei Advertizing-Kanälen aus. Die Advertizing-Kanäle liegen im ISM-Frequenzband, typischerweise zwei an den Rändern des Bandes und einer in der Mitte des Bandes. Insbesondere können die Kanäle 37, 38 und 39 als die Advertizing-Kanäle verwendet werden, auf den die Advertizing-Signale/Datenpakete gesendet werden. Normalerweise lauscht ein Bluetooth-LE-Transponder anschließend auf diesem Kanal nach einer Verbindungsanfrage, worauf dann auf einen der verbleibenden 37 Kanäle gewechselt wird, um einen Datenaustausch mit einem durchzuführen. Es handelt sich bei den Advertizing-Kanälen also um Broadcast (Rundruf) Kanäle, mit denen Datenpakete von einer Quelle aus an alle erreichbaren bzw. "zuhörenden" Teilnehmer des Bluetooth-Nachrichtennetzes übertragen werden können. Advertizing-Datenpakete (Broadcast-Datenpakete) können in regelmäßigen Abständen, d.h. periodisch, auf jedem Advertizing-Kanal gesendet werden. Ein Zeitintervall zwischen aufeinanderfolgenden Advertizing-Datenpaketen kann sowohl ein festes Intervall und eine zusätzliche zufällige Verzögerung umfassen. Ein Standard-Advertizing-Datenpaket umfasst eine Nutzlast von maximal 31 Byte für Daten, die den Sender und seine Fähigkeiten beschreiben. Es können damit auch beliebige benutzerdefinierte Informationen auf andere Geräte übertragen werden. Wenn die standardmäßige 31-Byte-Nutzlast nicht groß genug für die Daten ist, unterstützt BLE auch eine optionale sekundäre Advertizing-Nutzlast.

Erfindungsgemäß wird also keine Bluetooth-Verbindung zwischen dem Funketikett und einem Empfänger aufgebaut, um Daten zu übertragen, da eine solche Verbindung zu viel Energie kosten würde. Stattdessen wird lediglich das Advertizing-Datenpaket, das vom Funketikett ausgesandt wird, vom Empfänger aufgefangen. Dieses enthält sowohl mindestens eine Zustandsinformation und die eindeutige Kennung. Der Empfänger ist so konfiguriert, dass es das Advertizing-Datenpaket abfängt und die mindestens eine Zustandsinformation und die eindeutige Kennung aus dem Signal extrahiert. Die Größe von 31 Byte eines Standard-Advertizing-Datenpakets ist dabei prinzipiell ausreichend, um die mindestens eine Zustandsinformation und die eindeutige Kennung vom Funketikett auf den Empfänger zu übertragen.

Alternativ zum Bluetooth-Standard kann der Versand des Advertizing-Datenpakets auch über eine Kommunikation nach dem Wi-Fi Standard (IEEE 802.11) erfolgen. IEEE 802.11 ist eine Normenfamilie für Wireless Local Area Networks (WLAN). Service Set bezeichnet nach der Norm 802.11 des Institute of Electrical and Electronics Engineers alle Geräte in einem WLAN. Ein Service Set Identifier (SSID) ist ein frei wählbarer Name eines Service Sets, durch den es ansprechbar wird. Da diese Kennung oftmals manuell von einem Benutzer in Geräte eingegeben werden muss, ist sie oft eine Zeichenkette, die für Menschen leicht lesbar ist, und sie wird daher allgemein als Netzwerkname des WLANs bezeichnet. Ein SSID kann bis zu 32 Byte lang sein. Das erfindungsgemäße Funketikett kann so konfiguriert sein, dass es über Funk ein SSID-Datenpaket versendet, das die mindestens eine Zustandsinformation und die eindeutige Kennung umfasst. Der erfindungsgemäße Empfänger kann so konfiguriert sein, dass er das SSID-Datenpaket empfängt und die mindestens eine Zustandsinformation und die eindeutige Kennung extrahiert.

Ebenso ist es denkbar, dass die Übertragung der mindestens einen Zustandsinformation und der eindeutigen Kennung vom Funketikett auf den Empfänger mittels einer PAN-ID eines ZigBee-Netzwerks erfolgt.

Ebenso ist es denkbar, dass die Übertragung der mindestens einen Zustandsinformation und der eindeutigen Kennung vom Funketikett auf den Empfänger über ein Niedrigenergieweitverkehrnetzwerk (Low Power Wide Area Network (LPWAN oder LPN) wie beispielsweise ein NarrowBand IoT Netzwerk erfolgt.

Ebenso ist es denkbar, dass das erfindungsgemäße Funketikett als Kurzstreckenfunkgerät (Short Range Device, SRD) für die Versendung von Daten über ein Funknetzwerk wie beispielsweise das Sigfox-Funknetzwerk ausgerichtet ist. Sigfox ist ein französisches Telekommunikationsunternehmen, das ein eigenes, globales Funknetzwerk aufbaut, um Objekte mit geringem Energiebedarf drahtlos mit dem Internet zu verbinden. Die Geräte senden in festgelegten Intervallen kleine Datenmengen an eine Basisstation, die diese dann in eine Datenbank des jeweiligen Empfängers weitergibt. Sigfox nutzt ein Funksystem auf Basis von Ultra-Schmalband-Technologie (engl. Ultra Narrow Band). Sie wird als Low-Power Wide-Area Network (LPWAN) bezeichnet. LPWAN nutzt ein Langstrecken-Signal im ISM-Band (868 Megahertz in Europa, 902 Megahertz in den USA), das auch massive Objekte durchdringen kann. Im freien Gelände sind Distanzen von 30 bis 50 km überbrückbar, in Städten zwischen 3 bis 10 km. Sigfox-Basisstation können derzeit bis zu einer Million Objekte verwalten, wobei ein Tausendstel der Energie der Standard-Mobilfunksysteme benötigt wird. Sigfox-Geräte können laut eigener Aussage bis zu 20 Jahre lang mit lediglich zwei AA-Batterien arbeiten, weil sie nur aktiv werden, wenn sie eine Nachricht senden und dann direkt wieder in den Ruhezustand zurückkehren. Geräte im Sigfox-Netz nutzen zudem geringe Datenraten. Sie können maximal zwölf Bytes pro Nachricht und zugleich nicht mehr als 140 Nachrichten pro Gerät und Tag verschicken. Diese Kapazität ist jedoch ausreichend, um einfache Nachrichten wie die Verpackungszustandsinformation und die eindeutige Kennung zu übertragen.

Funketiketten und Empfänger sind vorzugsweise aufeinander abgestimmt, um möglichst wenig Energie für die Übertragung der Daten vom Funketikett auf den Empfänger zu verbrauchen. Das Funketikett ist vorzugsweise so konfiguriert, dass es sich die überwiegende Zeit in einem Ruhemodus befindet. Zu definierten Zeitpunkten wird es aktiv und versendet das Advertizing-Datenpaket umfassend die mindestens eine Zustandsinformation und die eindeutige Kennung. Es ist denkbar, dass das Funketikett zu regelmäßigen oder unregelmäßigen Zeitpunkten das Advertizing-Datenpaket versendet. Es ist denkbar, dass es das Advertizing-Datenpaket über eine definierte Zeitspanne oder wiederholend versendet, sobald es aktiv wird. Es ist denkbar, dass es durch ein Ereignis aktiviert wird und dann ein oder mehrere Male das Advertizing-Datenpaket versendet. Das Ereignis kann durch Umweltbedingungen und/oder durch den Empfänger und/oder durch den Nutzer des Produkts ausgelöst werden.

Die Versendung eines Advertizing-Datenpakets kann beispielsweise einmal in der Stunde oder einmal am Tag oder unregelmäßig erfolgen.

Der Empfänger kann so konfiguriert sein, dass er sich dauerhaft in einem Empfangsmodus befindet, in dem er definierte Frequenzbereiche nach einem Advertizing-Datenpaket absucht. Erkennt er ein Advertizing-Datenpaket, extrahiert er aus diesem Signal die mindestens eine Zustandsinformation und die eindeutige Kennung. Der Empfänger kann ein Advertizing-Datenpaket beispielsweise an einer definierten Struktur der enthaltenen Daten und/oder einer definierten Bit-Folge erkennen.

Es ist auch denkbar, dass der Empfänger nur zu definierten Zeitpunkten und/oder innerhalb definierter Zeitspannen in einen Empfangsmodus schaltet und auf das Eintreffen eines oder mehrerer Advertizing-Datenpakete wartet. Es ist beispielsweise denkbar, dass der Empfänger und/oder das Funketikett durch äußere Umwelteinflüsse in einen Aktivzustand versetzt werden, bei denen das Funketikett ein oder mehrere Advertizing-Datenpakete versendet und/oder der Empfänger einen oder mehrere definierte Frequenzbereiche nach dem einen oder den mehreren Advertizing-Datenpaketen absucht. Es könnte beispielsweise sein, dass der Empfänger und/oder das Funketikett durch Licht bei Erreichen einer Mindesthelligkeit und/oder durch Wärme bei Erreichen einer Mindesttemperatur aktiviert werden.

In einer bevorzugten Ausführungsform wird das Funketikett durch den Empfänger aktiviert. Es ist beispielsweise denkbar, dass der Empfänger ein Signal an das Funketikett sendet, wobei das Signal das Funketikett aktiviert und zum Senden des Advertizing-Datenpakets auffordert. Es ist auch denkbar, dass der Empfänger Energie zum Beispiel in Form von elektromagnetischer Energie bereitstellt, die vom Funketikett "geerntet" wird und das Funketikett aus dem Ruhemodus in einen Aktivmodus wechselt.

Ebenso kann das Funketikett durch das Öffnen der Verpackung aktiviert werden. Es ist beispielsweise denkbar, dass der Vorgang des Öffnens Energie zum Beispiel in Form von mechanischer Energie bereitstellt, die vom Funketikett "geerntet" wird und das Funketikett aus dem Ruhemodus in einen Aktivmodus wechselt.

Der erfindungsgemäße Empfänger kann ein stationäres, das heißt fest an einem Ort installiertes Gerät, oder ein mobiles (transportables) Gerät sein. Vorzugsweise handelt es sich um ein mobiles Gerät. Der Empfänger verfügt über eine Empfangseinheit, eine Ortsermittlungseinheit, eine Datenverarbeitungseinheit, eine Steuereinheit und eine Sendeeinheit.

Die Steuereinheit dient der Steuerung der einzelnen Komponenten des Empfängers und der Koordinierung der Daten- und Signalflüsse zwischen den Komponenten sowie der Daten- und Signalflüsse zwischen dem Empfänger und weiteren Geräten wie beispielsweise dem Funketikett.

Die Steuereinheit ist so konfiguriert, dass sie die Empfangseinheit veranlasst zu prüfen, ob ein Funketikett in der Nähe des Empfängers ein Advertizing-Datenpaket versendet. Falls ein solches Advertizing-Datenpaket von der Empfangseinheit empfangen wird, wird es an die Datenverarbeitungseinheit übermittelt. Die Datenverarbeitungseinheit wird veranlasst, aus dem Advertizing-Datenpaket die eindeutige Kennung und die mindestens eine Zustandsinformation zu extrahieren.

Mittels der Ortsermittlungseinheit ist der Empfänger in der Lage, die Position, an der er sich befindet, zu ermitteln. Der Empfänger kann beispielsweise über einen Sensor verfügen, der ein Signal von einem Satellitennavigationssystem empfängt und hierüber seine Position bestimmt. Bekannte Satellitennavigationssysteme sind beispielsweise NAVSTAR GPS, GLONASS, Galileo oder Beidou. Da sich die Abkürzung GPS (Globales Positionsbestimmungssystem) in der Umgangssprache als generische Bezeichnung für alle Satellitennavigationssysteme etabliert hat, wird in dieser Beschreibung der Begriff GPS als Sammelbezeichnung für alle Positionsbestimmungssysteme verwendet. Die Ortsinformation kann ferner aus der (Mobil-)Funkzelle, in der sich der Empfänger befindet, abgeleitet werden. Die Ortsermittlung hat jedoch weniger den Zweck, den Ort zu ermitteln, an dem sich der Empfänger befindet; vielmehr soll erfasst werden, wo sich ein bestimmtes Produkt gerade befindet. Da ein Funketikett jedoch nur eine vergleichsweite kurze Reichweite hat, reicht es üblicherweise aus, den Ort des Empfängers zu einem Zeitpunkt zu kennen, an dem er ein Advertizing-Datenpaket von einem Funketikett empfangen konnte. Der Ort des Funketiketts entspricht dann in etwa dem Ort des Empfängers. Vorzugsweise führt der Empfänger daher immer dann eine Ortsbestimmung durch, wenn er ein Advertizing-Datenpaket von einem Funketikett empfangen hat und verknüpft die aus dem Advertizing-Datenpaket extrahierten Informationen (Zustandsinformation und eindeutige Kennung) mit der ermittelten Ortsinformation. Es ist auch denkbar, dass mehrere Empfänger ein ausgesandtes Advertizing-Datenpaket empfangen und über eine Triangulierung den Ort des Funketiketts ermitteln.

Über die Sendeeinheit kann der Empfänger Daten an weitere Geräte übermitteln. Vorzugsweise ist der Empfänger über ein Netzwerk wie beispielsweise ein Mobilfunknetz und/oder das Internet mit einem oder mehreren Servern verbunden, an die er Daten übermitteln kann. Die Steuereinheit ist so konfiguriert, dass sie die Sendeeinheit veranlasst, die eindeutige Kennung und die mindestens eine Zustandsinformation und die Ortsinformation über ein Netzwerk an einen Server zu übermitteln. Die Übermittlung der Informationen kann unmittelbar nach deren Ermittlung erfolgen; es ist aber auch denkbar, dass der Empfänger die ermittelten Informationen zunächst in einem internen Datenspeicher speichert und sie erst zu einem späteren Zeitpunkt an einen externen Server übermittelt. Die Übermittlung von Informationen an einen Server kann zu regelmäßigen Zeiten, zum Beispiel einmal am Tag oder einmal in der Stunde oder alle 5 Minuten oder dergleichen, oder unregelmäßig erfolgen. Denkbar ist auch, dass der Server Informationen von dem Empfänger abruft.

Der Server empfängt die eindeutige Kennung und die mindestens eine Zustandsinformation und die Ortsinformation und speichert die Informationen in einer Datenbank zu dem jeweiligen Produkt, dem die eindeutige Kennung zugeordnet ist, ab. In der Datenbank ist somit die Information abrufbar vorhanden, wo sich ein bestimmtes Produkt (Produkteinheit) zu verschiedenen Zeitpunkten befunden hat und/oder wo es sich aktuell befindet und/oder in welchem Zustand es sich befunden hat und/oder in welchem Zustand es sich befindet und dergleichen. Aus den gespeicherten Daten lässt sich demnach prinzipiell die gesamte Historie eines Produkts von dem Prozess des Verpackens bis zu dem Zeitpunkt, bei dem es aus der Verpackung genommen wird, ermitteln.

Bei dem Empfänger kann es sich um ein Computersystem wie beispielsweise einen Laptop-Computer, einen Tablet-Computer oder ein Smartphone handeln. Die genannten Computersysteme verfügen üblicherweise über die genannten Funktionen; sie sind breit verfügbar, transportabel und lassen sich über Softwareprogrammes (Apps) erfindungsgemäß konfigurieren.

Gegenstand der vorliegenden Erfindung ist auch ein Computerprogrammprodukt, das einen Empfänger entsprechend konfiguriert, um Schritte des erfindungsgemäßen Verfahrens auszuführen:
- Abhorchen eines oder mehrerer Frequenzbereiche und Empfangen eines Advertizing-Datenpakets
- Extrahieren einer eindeutigen Kennung und mindestens einer Zustandsinformation aus dem Advertizing-Datenpaket,
- Ermitteln einer Ortsinformation, und
- Übermitteln der eindeutigen Kennung und der mindestens einen Zustandsinformation und der Ortsinformation über ein Netzwerk an einen Server.

Vorzugsweise ist das erfindungsgemäße Computerprogrammprodukt als App über ein Downloadportal verfügbar, von dem es auf einen erfindungsgemäßen Empfänger geladen und dort installiert werden kann.

Vorzugsweise sind eine Vielzahl an Funketiketten und Empfängern Bestandteile des erfindungsgemäßen Systems, so dass für eine Vielzahl an Produkteinheiten bekannt ist, wo sie sich befinden und in welchem Zustand sie sich befinden. Anhand dieser Informationen können Produktionsprozesse und/oder Logistik und/oder Lagerhaltung optimiert werden.

In einer Ausführungsform der vorliegenden Erfindung hat der Hersteller der Produkte Zugriff auf den Server und er nutzt die Informationen, um die Herstellung der Produkte zu optimieren, in dem er beispielsweise dann die Herstellung von Produkten initiiert, wenn die Zahl an ungeöffneten Verpackungen, die sich bei Endkunden befinden, unter einen definierten Schwellenwert fällt.

In einer Ausführungsform der vorliegenden Erfindung hat ein Vertreiber der Produkte Zugriff auf den Server und er nutzt die Informationen, um neue Produkte dann zu bestellen und/oder dann in ein definiertes Lager zu transportieren, wenn die Zahl an ungeöffneten Verpackungen, die sich bei Endkunden befinden, unter einen definierten Schwellenwert fällt.

Die Erfindung wird nachstehend anhand von Figuren und Beispielen näher erläutert, ohne die Erfindung auf die in den Figuren und Beispielen genannten Merkmale und Merkmalskombinationen beschränken zu wollen.

Es zeigen:

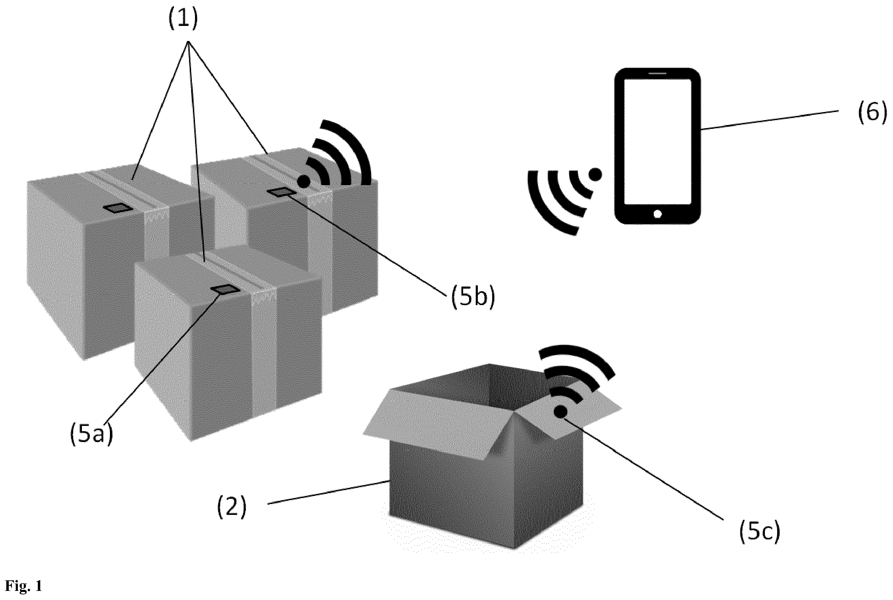

Figur 1 zeigt schematisch ein Beispiel für ein erfindungsgemäßes System umfassend eine Mehrzahl an Funketiketten (5a, 5b, 5c) und einen Empfänger (6). Der Empfänger (6) ist als Smartphone ausgeführt. Die Funketiketten (5a, 5b, 5c) sind auf Verpackungen (1, 2) aufgebracht, in denen sich Produkte (nicht gezeigt) befinden. Drei Verpackungen (1) befinden sich im ungeöffneten Zustand; eine Verpackung (2) befindet sich im geöffneten Zustand. In der Figur ist durch Funksymbole angedeutet, dass zwei Funketiketten (5b, 5c) jeweils ein Advertizing-Datenpaket versenden. Die Advertizing-Datenpakete werden von dem Empfänger (6) empfangen. Die Advertizing-Datenpakete enthalten jeweils eine eindeutige Kennung sowie eine Information darüber, ob die jeweilige Verpackung geöffnet (5c) oder ungeöffnet (5b) ist (in der Figur nicht gezeigt).

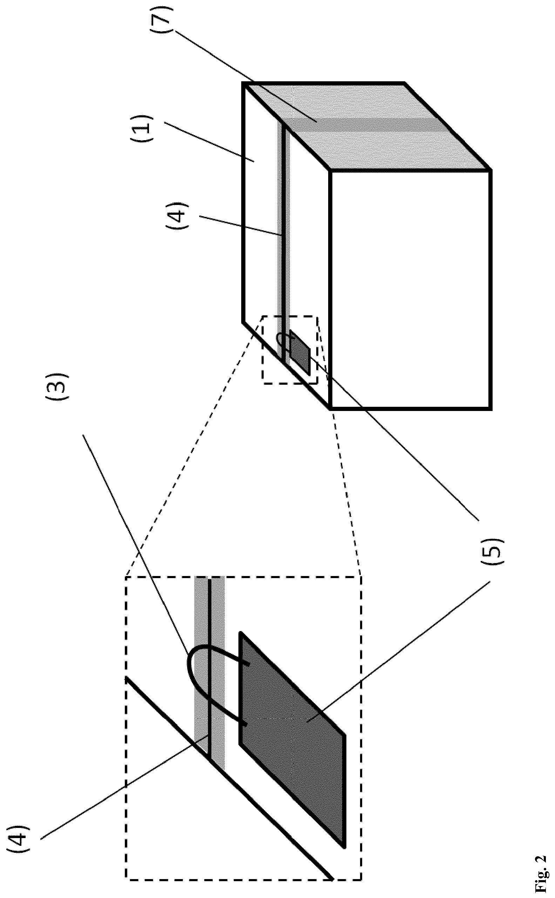

Figur 2 zeigt schematisch ein Beispiel für ein Funketikett (5), das auf einer Verpackung (1) für ein Produkt aufgebracht ist. Die Verpackung (1) ist durch einen Klebestreifen (7) verschlossen. Würde man den Klebestreifen (7) abziehen oder entlang der Linie (4) aufschneiden, würde ein elektrisch leitfähiger Draht (3), der Bestandteil des Funketiketts (5) ist, unterbrochen werden. Das Funketikett (5) kann so hergerichtet sein, dass es die Unterbrechung des Drahts (3) erkennt und somit unterscheiden kann, ob die Verpackung (1) ungeöffnet oder geöffnet ist.

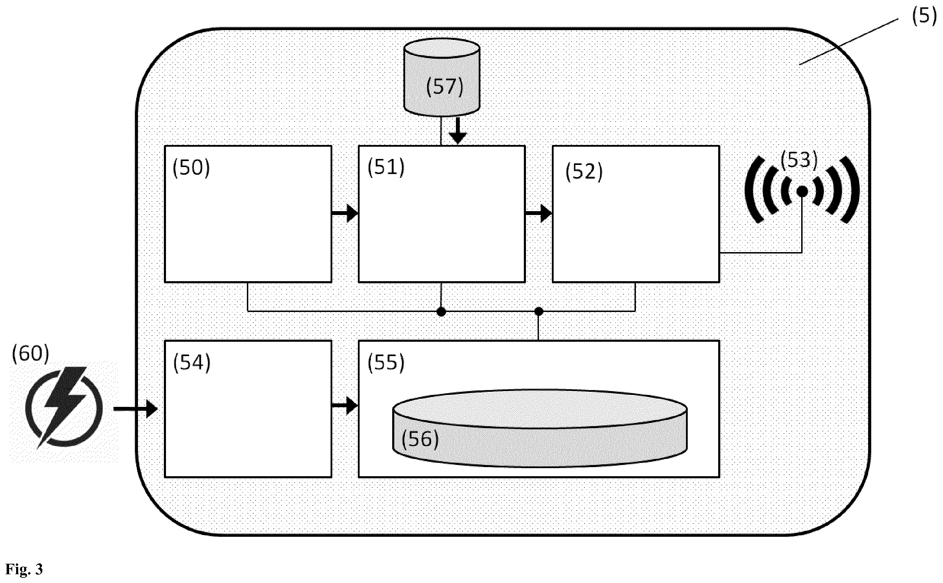

Figur 3 zeigt schematisch ein Beispiel für ein Funketikett (5). Das Funketikett (5) verfügt über einen Energiewandler (54), der Energie (60) aus der Umwelt nutzen ("ernten") kann, z.B. eine Induktionsspule. Das Funketikett (5) verfügt ferner über eine Energiemanagementeinheit (55), die einen Energiespeicher (56), zum Beispiel einen Kondensator, umfasst. Ein Sensor (50) dient der Erkennung des Verpackungszustands (geöffnet/ungeöffnet). Eine Steuereinheit (51) dient der Steuerung der einzelnen Komponenten und der Koordinierung der Daten- und Signalflüsse. Mittels einer Sendeeinheit (52, 53) können Advertizing-Datenpakete versandt werden. In einem Datenspeicher (57) sind die eindeutige Kennung und optional die Verpackungszustandsinformation abgelegt.

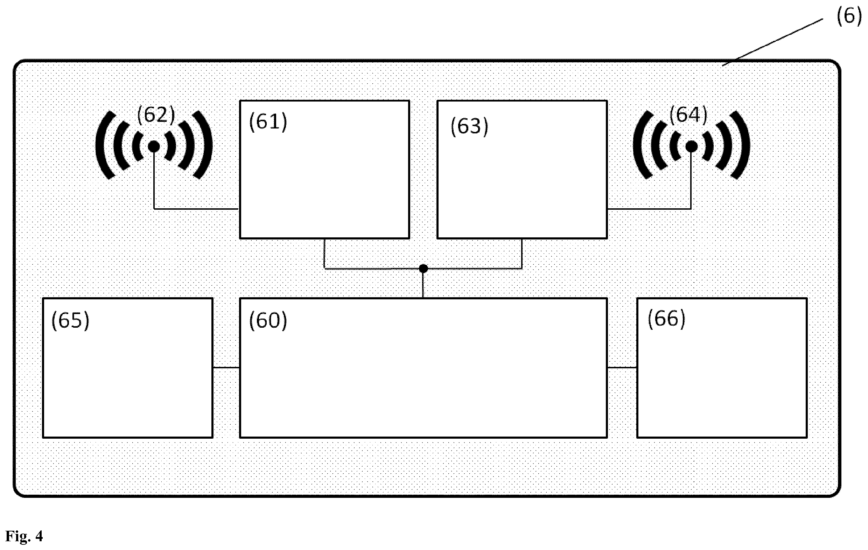

Figur 4 zeigt schematisch ein Beispiel für einen Empfänger (6). Der Empfänger (6) verfügt über eine Empfangseinheit (61, 62) mit der Advertizing-Datenpakete empfangen werden können. Eine Steuereinheit (60) dient der Steuerung der einzelnen Komponenten und der Koordinierung der Daten- und Signalflüsse. Mittels einer Ortsermittlungseinheit (65) kann der Ort, an dem sich der Empfänger (6) befindet, ermittelt werden (Ortsinformation). Eine Datenverarbeitungseinheit (66) dient der Extrahierung von Daten (eindeutige Kennung und Verpackungszustandsinformation) aus einem empfangenen Advertizing-Datenpaket und der Verknüpfung der extrahierten Daten mit der Ortsinformation. Über eine Sendeeinheit (63, 64) können die ermittelten Daten (eindeutige Kennung und Verpackungszustandsinformation und Ortsinformation) über ein Netzwerk an einen Server (nicht gezeigt) übermittelt werden.

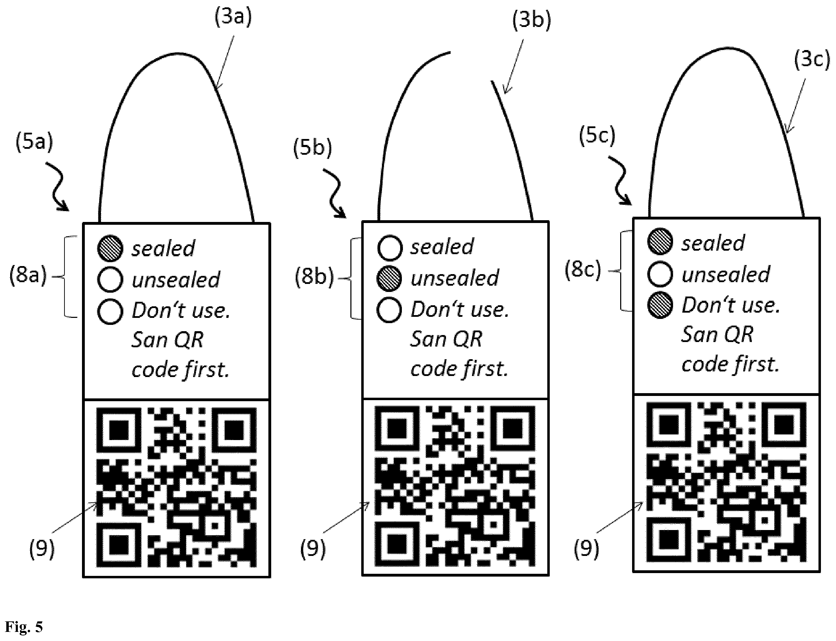

Figur 5 zeigt beispielhaft drei Funketiketten (5a, 5b, 5c) in verschiedenen Zuständen. Jedes der Funketiketten (5a, 5b, 5c) verfügt über einen leitfähigen Draht (3a, 3b, 3c), eine Statusanzeige (8a, 8b, 8c) und einen optisch lesbaren Code (9).

Im Fall des Funketiketts (5a), ist der leitfähige Draht (3a) intakt. Eine Steuereinheit (nicht gezeigt) des Funketiketts erfasst über ein Sensor (nicht gezeigt), die Leitfähigkeit des Drahtes (3a) und erkennt, dass der Draht (3a) intakt ist. Die Steuereinheit veranlasst die Statusanzeige (8a) anzuzeigen, dass die Verpackung verschlossen ("sealed") ist. Diese Anzeige erfolgt zum Beispiel mittels einer Leuchtdiode oder einer Flüssigkristallanzeige.

Im Fall des Funketiketts (5b), ist der leitfähige Draht (3b) unterbrochen. Die Steuereinheit erfasst mittels des Leitfähigkeitssensors, dass der Draht (3b) unterbrochen ist und veranlasst die Statusanzeige (8b) anzuzeigen, dass die Verpackung geöffnet ("unsealed") ist.

Im Fall des Funketiketts (5c), ist der leitfähige Draht (3c) intakt. Die Steuereinheit erfasst mittels des Leitfähigkeitssensors, dass der Draht (3c) intakt ist und veranlasst die Statusanzeige (8c) anzuzeigen, dass die Verpackung verschlossen ("sealed") ist. Gleichzeitig wird über die Statusanzeige (8c) angezeigt, dass der Käufer/Nutzer das Produkt nicht verwenden sondern zunächst den optischen Code (9) einlesen sollte. Über den optischen Code gelangt der Käufer/Nutzer zu einer Internetseite, die ihm weitere Informationen gibt.

## Patentansprüche

1. Aktives Funketikett (5),
- wobei das Funketikett (5) so ausgestaltet ist, dass es mit einer Verpackung (1) eines Produkts verbunden werden kann,
- wobei das Funketikett (5) mindestens einen Sensor (50) umfasst, der mindestens eine Umgebungsbedingung und mindestens einen Verpackungszustand erfasst,
- wobei das Funketikett (5) so konfiguriert ist, dass es in zeitlichen Abständen ein Advertizing-Datenpaket aussendet,
- wobei das Advertizing-Datenpaket eine eindeutige Kennung und mindestens eine Zustandsinformation zu der mindestens einen Umgebungsbedingung und dem mindestens einen Verpackungszustand umfasst.

2. Funketikett (5) gemäß Anspruch 1, umfassend
- eine Energieversorgungseinheit,
- mindestens einen Sensor (50),
- eine Steuereinheit (51),
- einen Datenspeicher (57), in dem eine eindeutige Kennung gespeichert ist, und
- eine Sendeeinheit (52, 53),
wobei die Steuereinheit (51) so konfiguriert ist, dass sie mittels des mindestens einen Sensors (50) eine Verpackungszustandsinformation ermittelt, die angibt, ob die Verpackung geöffnet oder ungeöffnet ist, und eine Umweltbedingung ermittelt, und
wobei die Steuereinheit (51) so konfiguriert ist, dass sie die Sendeeinheit (52, 53) veranlasst, die eindeutige Kennung und die Verpackungszustandsinformation und die Umweltbedingung als ein Advertizing-Datenpaket zu versenden.

3. Funketikett (5) gemäß Anspruch 2, umfassend
- einen Sensor (50) zur Erfassung eines Verpackungszustands, und
- eine Statusanzeige (8a, 8b, 8c),
wobei die Steuereinheit (51) so konfiguriert ist, dass sie
mittels des Sensors (50) den Verpackungszustand ermittelt, und
die Statusanzeige (8a, 8b, 8c) veranlasst, den Verpackungszustand anzuzeigen.

4. Funketikett (5) gemäß einem der Ansprüche 1 bis 3, umfassend
einen Sensor zur Erfassung einer Umgebungsbedingung,
eine Statusanzeige,
wobei die Steuereinheit (51) so konfiguriert ist, dass sie
mindestens einen Messwert vom Sensor empfängt,
den mindestens einen Messwert mit einem definierten Grenzwert vergleicht, und
für den Fall, dass der Messwert unter- oder oberhalb des definierten Grenzwerts liegt, die Statusanzeige veranlasst, ein Warnsignal anzuzeigen.

5. Funketikett (5) gemäß einem der Ansprüche 1 bis 4, umfassend
einen Empfänger zum Empfang eines Signals,
eine Statusanzeige (8a, 8b, 8c),
wobei die Steuereinheit (51) so konfiguriert ist, dass sie
mittels des Empfängers ein Signal empfängt, und
die Statusanzeige (8a, 8b, 8c) veranlasst, ein Warnsignal anzuzeigen.

6. Funketikett (5) gemäß einem der Ansprüche 1 bis 5, umfassend
einen optisch lesbaren Code (9) umfassend eine eindeutige Kennung.

7. System umfassend
• mindestens ein Funketikett (5) gemäß einem der Ansprüche 1 bis 6, und
• mindestens einen Empfänger (6), wobei der Empfänger (6) umfasst:
- eine Empfangseinheit (61, 62),
- eine Ortsermittlungseinheit (65),
- eine Datenverarbeitungseinheit (66),
- eine Steuereinheit (60) und
- eine Sendeeinheit (63, 64)
wobei die Steuereinheit (60) des Empfängers (6) so konfiguriert ist, dass sie die Empfangseinheit (61, 62) des Empfängers (6) veranlasst ein oder mehrere Frequenzbereiche abzuhören und ein Advertizing-Datenpaket zu empfangen, das von dem aktiven Funketikett (5), das mit einer Verpackung (1) eines Produkts verbunden ist, versendet wird,
wobei die Steuereinheit (60) des Empfängers (6) so konfiguriert ist, dass sie die Datenverarbeitungseinheit (66) des Empfängers (6) veranlasst, aus dem Advertizing-Datenpaket eine eindeutige Kennung und eine oder mehrere Zustandsinformationen zu extrahieren,
wobei die Steuereinheit (60) des Empfängers (6) so konfiguriert ist, dass sie die Ortsermittlungseinheit (65) des Empfängers (6) veranlasst, eine Ortsinformation zu ermitteln, und
wobei die Steuereinheit (60) des Empfängers (6) so konfiguriert ist, dass sie die Sendeeinheit (63, 64) des Empfängers (6) veranlasst, die eindeutige Kennung und die Zustandsinformation(en) und die Ortsinformation über ein Netzwerk an einen Server zu übermitteln.

8. System gemäß Anspruch 7, wobei der Empfänger ferner umfasst:
- eine Kamera zum Lesen eines optischen Codes umfassend eine eindeutige Kennung,
wobei die Steuereinheit (60) des Empfängers (6) so konfiguriert ist, dass sie mittels der Kamera den optischen Code (9) empfängt, die eindeutige Kennung aus dem optischen Code (9) extrahiert, und einem Nutzer in Abhängigkeit der eindeutigen Kennung eine Information über das individuelle Produkt präsentiert.

9. System gemäß Anspruch 7 oder 8,
wobei die Steuereinheit (60) des Empfängers (6) so konfiguriert ist, dass sie über ein Netzwerk eine Mitteilung umfassend mindestens eine eindeutige Kennung empfängt,
wobei die Steuereinheit (60) so konfiguriert ist, dass sie über die Sendeeinheit (63, 64) ein Signal an diejenigen Funketiketten übermittelt, die die entsprechende mindestens eine eindeutige Kennung aufweisen.

10. Verfahren umfassend die Schritte
• Verbinden eines aktiven Funketiketts (5) gemäß einem der Ansprüche 1 bis 6 mit einer Verpackung (1) eines Produkts,
• Erfassen mindestens einer Umgebungsbedingung und mindestens eines Verpackungszustandes durch das Funketikett (5),
• Versenden eines Advertizing-Datenpakets durch das Funketikett (5), wobei das Advertizing-Datenpaket eine eindeutige Kennung und mindestens eine Zustandsinformation zu der mindestens einen Umgebungsbedingung und dem mindestens einen Verpackungszustand umfasst,
• Abhorchen eines oder mehrerer Frequenzbereiche und Empfangen des Advertizing-Datenpakets durch einen Empfänger (6),
• Extrahieren der eindeutigen Kennung und der mindestens einen Zustandsinformation aus dem Advertizing-Datenpaket durch den Empfänger (6),
• Ermitteln einer Ortsinformation durch den Empfänger (6), und
• Übermitteln der eindeutigen Kennung und der mindestens einen Zustandsinformation und der Ortsinformation über ein Netzwerk an einen Server.

11. Verfahren gemäß Anspruch 10, wobei die eindeutige Kennung und die Verpackungszustandsinformation und/oder die Umweltbedingung von dem Funketikett
- über ein Bluetooth-Advertizing-Datenpaket als Bluetooth-Name oder
- über ein WiFi-Advertizing-Datenpaket als WLAN SSID oder
- über ein ZigBee-Advertizing-Datenpaket als PAN-ID oder
- über ein SRD-Funksignal in eine Sigfox Cloud
propagiert wird.

12. Verfahren gemäß einem der Ansprüche 10 oder 11, umfassend die Schritte Anzeigen eines Verpackungszustands und/oder eines Warnsignals auf einer Statusanzeige (8a, 8b, 8c) Funketiketts (5).

## Claims

1. Active radio tag (5),
wherein the radio tag (5) is configured such that it can be connected to a packaging (1) of a product,
wherein the radio tag (5) comprises at least one sensor (50) which detects at least one environmental condition and at least one packaging state,
wherein the radio tag (5) is configured to transmit an advertising data packet at time intervals,
wherein the advertising data packet comprises a unique identifier and at least one state information relating to the at least one environmental condition and the at least one packaging state.

2. Radio tag (5) according to claim 1, comprising
a power supply unit,
at least one sensor (50),
a control unit (51),
a data memory (57) in which a unique identifier is stored, and
a transmitting unit (52, 53),
wherein the control unit (51) is configured to determine, by means of the at least one sensor (50), a packaging state information indicating whether the packaging is opened or unopened, and to determine an environmental condition, and
wherein the control unit (51) is configured to cause the transmitting unit (52, 53) to transmit the unique identifier and the packaging state information and the environmental condition as an advertising data packet.

3. Radio tag (5) according to claim 2, comprising
a sensor (50) for detecting a packaging state, and
a status indicator (8a, 8b, 8c),
wherein the control unit (51) is configured to determine the packaging state by means of the sensor (50), and to cause the status indicator (8a, 8b, 8c) to display the packaging state.

4. Radio tag (5) according to any one of claims 1 to 3, comprising a sensor for detecting an environmental condition, a status indicator, wherein the control unit (51) is configured to receive at least one measurement value from the sensor, to compare the at least one measurement value with a defined threshold value, and in the event that the measurement value is below or above the defined threshold value, to cause the status indicator to display a warning signal.

5. Radio tag (5) according to any one of claims 1 to 4, comprising a receiver for receiving a signal, a status indicator (8a, 8b, 8c), wherein the control unit (51) is configured to receive a signal by means of the receiver, and to cause the status indicator (8a, 8b, 8c) to display a warning signal.

6. Radio tag (5) according to any one of claims 1 to 5, comprising an optically readable code (9) comprising a unique identifier.

7. System comprising at least one radio tag (5) according to any one of claims 1 to 6, and at least one receiver (6), wherein the receiver (6) comprises:
a receiving unit (61, 62),
a location determination unit (65),
a data processing unit (66),
a control unit (60), and
a transmitting unit (63, 64),
wherein the control unit (60) of the receiver (6) is configured to cause the receiving unit (61, 62) of the receiver (6) to monitor one or more frequency ranges and to receive an advertising data packet transmitted by the active radio tag (5) connected to a packaging (1) of a product,
wherein the control unit (60) of the receiver (6) is configured to cause the data processing unit (66) of the receiver (6) to extract a unique identifier and one or more state information from the advertising data packet,
wherein the control unit (60) of the receiver (6) is configured to cause the location determination unit (65) of the receiver (6) to determine location information, and
wherein the control unit (60) of the receiver (6) is configured to cause the transmitting unit (63, 64) of the receiver (6) to transmit the unique identifier and the state information(s) and the location information to a server via a network.

8. System according to claim 7, wherein the receiver further comprises:
a camera for reading an optical code comprising a unique identifier,
wherein the control unit (60) of the receiver (6) is configured to receive the optical code (9) by means of the camera, to extract the unique identifier from the optical code (9), and to present information about the individual product to a user depending on the unique identifier.

9. System according to claim 7 or 8,
wherein the control unit (60) of the receiver (6) is configured to receive a message comprising at least one unique identifier via a network,
wherein the control unit (60) is configured to transmit a signal via the transmitting unit (63, 64) to those radio tags which have the corresponding at least one unique identifier.

10. Method comprising the steps of
connecting an active radio tag (5) according to any one of claims 1 to 6 to a packaging (1) of a product,
detecting at least one environmental condition and at least one packaging state by the radio tag (5),
transmitting an advertising data packet by the radio tag (5), wherein the advertising data packet comprises a unique identifier and at least one state information relating to the at least one environmental condition and the at least one packaging state,
monitoring one or more frequency ranges and receiving the advertising data packet by a receiver (6),
extracting the unique identifier and the at least one state information from the advertising data packet by the receiver (6),
determining location information by the receiver (6), and
transmitting the unique identifier and the at least one state information and the location information to a server via a network.

11. Method according to claim 10, wherein the unique identifier and the packaging state information and/or the environmental condition is propagated by the radio tag
via a Bluetooth advertising data packet as a Bluetooth name, or
via a WiFi advertising data packet as a WLAN SSID, or
via a ZigBee advertising data packet as a PAN-ID, or
via an SRD radio signal into a Sigfox Cloud.

12. Method according to any one of claims 10 or 11, comprising the steps of
displaying a packaging state and/or a warning signal on a status indicator (8a, 8b, 8c) of the radio tag (5).

## Revendications

1. Étiquette radio active (5),
dans laquelle l'étiquette radio (5) est conçue de telle sorte qu'elle peut être reliée à un emballage (1) d'un produit,
dans laquelle l'étiquette radio (5) comprend au moins un capteur (50) qui détecte au moins une condition environnementale et au moins un état d'emballage,
dans laquelle l'étiquette radio (5) est configurée pour émettre un Paquet de données d'avertissement à des intervalles de temps,
dans lequel le Paquet de données d'avertissement comprend un identifiant unique et au moins une information d'état relative à la au moins une condition environnementale et au au moins un état d'emballage.

2. Étiquette radio (5) selon la revendication 1, comprenant
une unité d'alimentation en énergie,
au moins un capteur (50),
une unité de commande (51),
une mémoire de données (57) dans laquelle un identifiant unique est stocké, et
une unité d'émission (52, 53),
dans laquelle l'unité de commande (51) est configurée pour déterminer, au moyen du au moins un capteur (50), une information d'état de l'emballage indiquant si l'emballage est ouvert ou non ouvert, et pour déterminer une condition environnementale, et
dans laquelle l'unité de commande (51) est configurée pour amener l'unité d'émission (52, 53) à transmettre l'identifiant unique et l'information d'état de l'emballage et la condition environnementale sous forme d'un Paquet de données d'avertissement.

3. Étiquette radio (5) selon la revendication 2, comprenant
un capteur (50) pour la détection d'un état d'emballage, et
un Indicateur d'état (8a, 8b, 8c),
dans laquelle l'unité de commande (51) est configurée pour déterminer l'état d'emballage au moyen du capteur (50), et pour amener l'Indicateur d'état (8a, 8b, 8c) à afficher l'état d'emballage.

4. Étiquette radio (5) selon l'une quelconque des revendications 1 à 3, comprenant un capteur pour la détection d'une condition environnementale, un Indicateur d'état, dans laquelle l'unité de commande (51) est configurée pour recevoir au moins une valeur de mesure du capteur, pour comparer la au moins une valeur de mesure avec une valeur limite définie, et dans le cas où la valeur de mesure est inférieure ou supérieure à la valeur limite définie, pour amener l'Indicateur d'état à afficher un signal d'avertissement.

5. Étiquette radio (5) selon l'une quelconque des revendications 1 à 4, comprenant un récepteur pour la réception d'un signal, un Indicateur d'état (8a, 8b, 8c), dans laquelle l'unité de commande (51) est configurée pour recevoir un signal au moyen du récepteur, et pour amener l'Indicateur d'état (8a, 8b, 8c) à afficher un signal d'avertissement.

6. Étiquette radio (5) selon l'une quelconque des revendications 1 à 5, comprenant un code lisible optiquement (9) comprenant un identifiant unique.

7. Système comprenant au moins une étiquette radio (5) selon l'une quelconque des revendications 1 à 6, et au moins un récepteur (6), dans lequel le récepteur (6) comprend :
une unité de réception (61, 62),
une unité de détermination de position (65),
une unité de traitement de données (66),
une unité de commande (60), et
une unité d'émission (63, 64),
dans lequel l'unité de commande (60) du récepteur (6) est configurée pour amener l'unité de réception (61, 62) du récepteur (6) à surveiller une ou plusieurs Plages de fréquences et à recevoir un Paquet de données d'avertissement émis par l'étiquette radio active (5) reliée à un emballage (1) d'un produit,
dans lequel l'unité de commande (60) du récepteur (6) est configurée pour amener l'unité de traitement de données (66) du récepteur (6) à extraire un identifiant unique et une ou
plusieurs informations d'état du Paquet de données d'avertissement,
dans lequel l'unité de commande (60) du récepteur (6) est configurée pour amener l'unité de détermination de position (65) du récepteur (6) à déterminer une information de localisation, et
dans lequel l'unité de commande (60) du récepteur (6) est configurée pour amener l'unité d'émission (63, 64) du récepteur (6) à transmettre l'identifiant unique et la ou les informations d'état et l'information de localisation à un serveur via un réseau.

8. Système selon la revendication 7, dans lequel le récepteur comprend en outre :
une caméra pour la lecture d'un code optique comprenant un identifiant unique,
dans lequel l'unité de commande (60) du récepteur (6) est configurée pour recevoir le code optique (9) au moyen de la caméra, pour extraire l'identifiant unique du code optique (9), et pour présenter à un utilisateur une information sur le produit individuel en fonction de l'identifiant unique.

9. Système selon la revendication 7 ou 8,
dans lequel l'unité de commande (60) du récepteur (6) est configurée pour recevoir via un réseau un message comprenant au moins un identifiant unique,
dans lequel l'unité de commande (60) est configurée pour transmettre un signal via l'unité d'émission (63, 64) aux étiquettes radio qui présentent le au moins un identifiant unique correspondant.

10. Procédé comprenant les étapes de
relier une étiquette radio active (5) selon l'une quelconque des revendications 1 à 6 à un emballage (1) d'un produit,
détecter au moins une condition environnementale et au moins un état d'emballage par l'étiquette radio (5),
transmettre un Paquet de données d'avertissement par l'étiquette radio (5), dans lequel le Paquet de données d'avertissement comprend un identifiant unique et au moins une information d'état relative à la au moins une condition environnementale et au au moins un état d'emballage,
surveiller une ou plusieurs Plages de fréquences et recevoir le Paquet de données d'avertissement par un récepteur (6),
extraire l'identifiant unique et la au moins une information d'état du Paquet de données d'avertissement par le récepteur (6),
déterminer une information de localisation par le récepteur (6), et
transmettre l'identifiant unique et la au moins une information d'état et l'information de localisation à un serveur via un réseau.

11. Procédé selon la revendication 10, dans lequel l'identifiant unique et l'information d'état de l'emballage et/ou la condition environnementale est propagé(e) par l'étiquette radio
via un Paquet de données d'avertissement Bluetooth en tant que nom Bluetooth, ou
via un Paquet de données d'avertissement WiFi en tant que WLAN SSID, ou
via un Paquet de données d'avertissement ZigBee en tant que PAN-ID, ou
via un signal radio SRD dans un Sigfox Cloud.

12. Procédé selon l'une quelconque des revendications 10 ou 11, comprenant les étapes de afficher un état d'emballage et/ou un signal d'avertissement sur un Indicateur d'état (8a, 8b, 8c) de l'étiquette radio (5).
